# EUROPEAN PATENT SPECIFICATION

(11) **EP 1 131 366 B1**
(45) Date of publication and mention of the grant of the patent: **24.03.2004**
(21) Application number: 99969725.3
(22) Date of filing: 04.09.1999
(51) Int. Cl.: C08G 18/38, C08G 18/10

(54) **PROCESS FOR PRODUCING POLYURETHANES USING BIS-(4- AMINO-2- HALOGENO-3, 5-DIALKYLPHENYL) -METHANE AND ARTICLES PREPARED THEREFROM**
VERFAHREN ZUR HERSTELLUNG VON AUF BIS-(-4-AMINO-2-HALOGEN-3,5-DIALKYLPHENYL)-METHAN BASIERENDEN POLYURETHANEN UND DARAUS HERGESTELLTE GEGENSTÄNDE
PROCEDE DE PRODUCTION DE POLYURETHANNES AU MOYEN DE BIS-(-4-AMINO-2-HALOGENO-3.5-DIALKYLPHENYL)-METHANE ET ARTICLES OBTENUS A PARTIR DE CES POLYURETHANNES

(30) Priority: 25.09.1998 DE 19844002
(43) Date of publication of application: 12.09.2001
(73) Proprietor: GAMBRO DIALYSATOREN GmbH & CO. KG, 72371 Hechingen (DE)
(72) Inventor: BAUER, Ulrich, Robert, D-72379 Hechingen-Sickingen (DE); Schön, Michael, 73655 Plüdershausen (DE)
(74) Representative: Weber, Dieter, Dr.
(86) International application number: PCT/EP1999/006519
(87) International publication number: WO 2000/018816

(56) References cited:
- EP-A- 0 220 641
- EP-A- 0 387 894
- WO-A-94/13722
- WO-A-97/21749

## Description

Usually polyurethane casting materials, for example for embedding medical articles, in particular membranes, comprise three main components, more specifically di- and/or polyisocyanate, di- and/or polyhydric alcohol as well as a catalyst or accelerator. The di- and/or polyisocyanate used is for example diphenylmethane diisocyanate. toluylene diisccyanate and their prepolymers or hexamethylene diisocyanate. dicyclohexylmethane diisocyanate, isophorone diisocyanate and their prepolymers. The polyhydric alcohols that are considered are for example polyether polyhydric alcohols or polyester polyhydric alcohols and in particular in the medical area of use also castor oil. Normal catalysts for the production of polyurethanes are those based on tin, mercury. lead. bismuth, iron or acid-based catalysts.

When embedding membrane materials, in particular for medical engineering, the use of conventional polyurethane-based casting materials requires very. complicated and expensive drying procedures which either necessitate long drying times or are highly cost-intensive. Those expensive drying procedures are required in order to achieve a bubble-free or foam-free casting.

Therefore the object of the present invention is to provide a process for producing polyurethanes. in particular for embedding articles in medical engineering, wherein a drying operation for the articles to be embedded such as hollow fibre membrane bunches can be substantially eliminated or the drying measures can be greatly reduced.

That object is attained in accordance with the invention. For that purpose, a process for producing polyurethanes by reaction of
a) di- and/or polyisocyanate, and
b) di- and/or polyhydric alcohol
in the presence of at least one metal compound as a catalyst is characterised in that there is added to the reaction mixture at least one bis-(4-amino-2-halogeno-3.5-dialkylphenyl)-methane of the general formula: 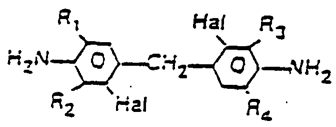 wherein Hal means Cl or Br and R₁ to R₄ are the same or different and each denote an alkyl group having 1 to 4 carbon atoms, and at least one metallo-organic compound is used as the catalyst.

These two types of compounds afford a surprising synergistic effect as the bis-(4-amino-2-halogeno-3.5-dialkylphenyl)-methane alone does not afford satisfactory results, in particular for the sector of medical engineering The addition of that compound in amounts of at least 3% by weight admittedly results in avoiding the formation of foam and bubbles or blowholes for example when casting water-bearing membranes, but in that case white and porous end products are the result, which in most cases are not acceptable, and hardening either takes place very slowly over hours with the addition of a few percent of that compound and relatively quickly only when adding relatively large amounts such as 10 % by weight. The products achieved in that way are not acceptable as embedding materials in regard to medical engineering as they are porous and do not enjoy adequate adhesion for example to the dialyser housing and the hollow fibre membranes to be embedded.

The combination with special catalysts, namely metallo-organic compounds, means however that the reaction mixture no longer becomes cloudy but remains transparent and enjoys good mechanical properties such as good adhesion to articles such as hollow fibre membranes, dialyser housings and so forth.

The amount of catalyst to be added depends on the added amount of bis-(4-amino-2-halogeno-3,5-dialkylphenyl)-methane and can easily be optimised by the average man skilled in the art on the basis of the foregoing technical teaching, by carrying out a few serial tests.

Upon an increase in the amount of catalyst, for example in order to increase the reaction speed, slight bubble or blowhole formation can occur in the polyurethane due to moisture of the articles to be embedded, but the extent of such bubble or blowhole formation is much lesser than foam formation when using commercially available polyurethane resins. Bubble or blowhole formation in the case of the process according to the invention usually occurs at most along the wet hollow fibre membranes which are to be embedded, without bubble or blowhole formation encroaching onto the remaining resin mixture. If such a slight degree of bubble or blowhole formation is also undesired, it is preferable for the catalyst to be added only in such an amount that clouding of the reaction mixture just disappears or the reaction mixture just goes clear. In accordance with the invention, with a suitable choice of the catalyst and the amount of catalyst added, it is possible for even wet hollow fibre membranes to be embedded in an absolutely bubble-free condition. As the amount of catalyst cannot be increased just as may be desired, the reaction speed can be increased by the addition of an increased amount of bis-(4-amino-2-halogeno-3,5-dialkylphenyl)-methane, with simultaneous adaptation of the concentration of catalyst.

The added amount of bis-(4-amino-2-halogeno-3,5-dialkylphenyl)-methane is desirably in the range of from 3 to 10 % by weight, preferably in the range of from 5 to 10 % by weight, with respect to the total weight of the components a) + b). With an addition of the order of magnitude of 5 % by weight upwards, hardening of the embedding material generally occurs in the region of a few minutes. If a reduction in the rate of hardening is desired. that can be achieved by means of lower temperatures. Conversion can be implemented at ambient temperature, by increasing the temperature for example to 50°C solubility of the bis-(4-amino-2-halogeno-3,5-dialkylphenyl)-methane for example in castor oil is increased so that a considerable reduction in the reaction time becomes a possibility.

The process according to the invention preferably uses bis-(4-amino-2-halogeno-3,5-dialkylphenyl)-methane of the foregoing formula, in which Hal denotes chlorine. Preferably in the bis-(4-amino-2-halogeno-3,5-dialkylphenyl)-methane the substituents R₁ to R₄ are all ethyl groups.

The process according to the invention can be used for any usual polyurethanes. in which respect hexamethylene diisocyanate, diphenylmethane diisocyanate, toluylene diisocyanate, isophorone diisocyanate. dicyclohexylmethane diisocyanate or mixtures thereof are preferably used as component a). The hydrophobic polyhydric alcohols which are usual for the medical sector such as polyester polyhydric alcohols. polyether polyhydric alcohols and castor oil or mixtures thereof can be used as the polyhydric alcohols. Polyurethane resins which are known in the medical engineering sector as embedding materials, comprising hexamethylene diisocyanate, pre-adducts and hydrophobic polyhydric alcohols can be produced in accordance with the invention, with the advantages indicated.

Different metallo-organic compounds fall to be considered as the catalysts, in particular dioctyltin dilaurate.

### Example 1

A resin mixture is made up from the following components:

| | |
|---|---|
| Bis-(4-amino-2-chloro-3.5-diethylphenyl)-methane | 5 % |
| Castor oil | 95.955 % |
| Dioctyltin dilaurate | 0.045 % |

An aliphatic isocyanate of the hexamethylene diisocyanate type (Tolonate HDTLV from Rhone-Poulenc) was used as the hardener component.

That mixture was used to cast fibre bunches which had the following residual water contents:
a) 20 g of water per bunch = about 0.6 g of water per gram of bunch dry weight
b) 40 g of water per bunch = about 1.25 g of water per gram of bunch dry weight
c) 60 g of water per bunch = about 1.9 g of water per gram of bunch dry weight
Result:
a) no bubble formation to be found
b) no bubble formation to be found
c) very slight bubble formation can be found

### Example 2

A resin mixture is made up from the following components:

| | |
|---|---|
| Bis-(4-amino-2-chloro-3,5-diethylphenyl)-methane | 5 % |
| Lupranol 3900 | 20 % (hydrophilic polyhydric alcohol) |
| Castor oil | 74.962 % |
| Dioctyltin dilaurate | 0.038 % |

An aliphatic isocyanate of the HDI type (Tolonate HDTLV from Rhone-Poulenc) was used as the hardener component.

That mixture was used to cast fibre bunches which had the following residual water contents:
a) 20 g of water per bunch = about 0.6 g of water per gram of bunch dry weight
b) 40 g of water per bunch = about 1.25 g of water per gram of bunch dry weight
c) 60 g of water per bunch = about 1.9 g of water per gram of bunch dry weight
Result:
a) no bubble formation to be found
b) very slight bubble formation to be found
c) slight bubble formation can be found

This Example shows that the tendency to a higher level of water sensitivity rises due to the use of hydrophilic resin components.

In comparison with standard production in which a water content of about 0.03 to 0.04 g per gram of bunch dry weight can be tolerated, both Examples show that castings which are still acceptable can be produced with 15 to 40 times the amount of water on the bunch.

## Claims

1. A process for producing polyurethanes by reaction of
a) di- and/or polyisocyanate, and
b) di- and/or polyhydric alcohol in the presence of
c) at least one bis-(4-amino-2-halogeno-3,5-dialkylphenyl)-methane of the general formula 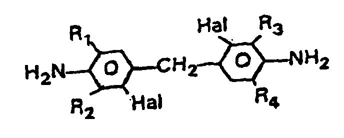
wherein Hal means Cl or Br and R₁ to R₄ are the same or different and each denote an akyl group having 1 to 4 carbon atoms, and at least one metallo-organic compound as a catalyst,
**characterized in, that** there are added 3 to 10 wt.%, based on the total weight of the components a) + b), of the bis-(4-amino-2-halogeno-3,5-dialkylphenyl)-methane, to the reaction mixture.

2. A process according to claim 1 **characterized in that** a bis-(4-amino-2-halogeno-3,5-dialkylphenyl)-methane is added, in which Hal means Cl.

3. A process according to claim 1 or claim 2 **characterized in that** a bis(-4-amino-2-halogeno-3,5-dialkylphenyl)-methane is added, in which the substituents R₁ to R₄ denote ethyl.

4. A process according to one of claims 1 to 3 **characterized in that** from 5 to 10 wt.% of the bis-(4-amino-2-halogeno-3,5-dialkylphenyl)-methane, with respect to the total weight of a) + b) are added to the reaction mixture.

5. A process according to one of claims 1 to 4 **characterized in that** hexamethylene diisocyanate, diphenylmethane diisocyanate, toluylene diisocyanate, isophorone diisocyanate and/or dicyclohexylmethane diisocyanate are used as component a).

6. A process according to one of claims 1 to 5 **characterized in that** castor oil, at least one polyesterpolyhydric alcohol and/or at least one polyether polyhydric alcohol are used as component b).

7. A process according to one of claims 1 to 6 **characterized in that** dioctyltin dilaurate is used as the catalyst.

8. A process according to one of claims 1 to 7 **characterized in that** the catalyst is added in such an amount that clouding of the reaction mixture just disappears.

9. A polyurethane article comprising
a) di- and/or polyisocyanate residues,
b) di- and/or polyhydric alcohol residues and
c) bound residues of bis-(4-amino-2-halogeno-3,5-dialkylphenyl)-methane of the general formula 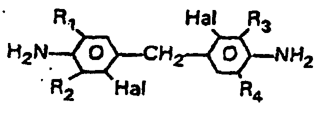
wherein Hal means Cl or Br and R₁ to R₄ are the same or different and each denote an alkyl group having 1 to 4 carbon atoms and at least one metallo-organic compound as a catalyst,
**characterized in that** the polyurethane contains 3 to 10 wt.% with respect to the total weight of a) +b) of the bis-(4-amino-2-halogeho-3,5-dialkylphenyl)-methane residues.

10. An article according to claim 9 **characterized in that** in the bis-(4-amino-2-halogeno-3,5-dialkylphenyl)-methane residues Hal denotes Cl.

11. An article according to claim 9 or claim 10 **characterized in that** in the bis-(4-amino-2-halogeno-3,5-dialkylphenyl)-methane residues R₁ to R₄ are ethyl residues.

12. An article according to one of claims 9 to 11 **characterized in that** it contains 5 to 10 wt.% of the bis-(4-amino-2-halogeno-3,5-dialkylphenyl)-methane residues.

13. An article according to claims 9 to 12 **characterized in that** as polyisocyanate residues it contains hexamethylene diisocyanate, diphenylmethane diisocyanate, toluylene diisocyanate, isophoronediisocyanate and/or dicyclohexylmethane diisocyanate residues.

14. An article according to on of claims 9 to 13 **characterized in that** it contains castor oil, polyester polyhydric alcohol and/or polyether polyhydric alcohol residues as the polyhydric alcohol residues.

15. An article according to one of claims 9 to 14 **characterized in that** it is an embedding of medical-engineering articles, in particular membranes.

## Patentansprüche

1. Verfahren zur Herstellung von Polyurethanen durch Umsetzung
a) von Di- und/oder Polyisocyanat und
b) zwei- und/oder mehrwertigem Alkohol in Gegenwart von
c) wenigstens einem Bis-(4-amino-2-halogeno-3,5-dialkylphenyl)-methan der allgemeinen Formel 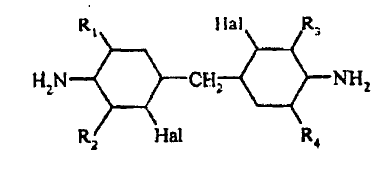
worin Hal Cl oder Br bedeutet und R₁ bis R₄ gleich oder verschieden sind und jeweils eine Alkylgruppe mit 1 bis 4 Kohlenstoffatomen bedeuten, und wenigstens einer metallorganischen Verbindung als ein Katalysator,
**dadurch gekennzeichnet, daß** 3 bis 10 Gew.-%, bezogen auf das Gesamtgewicht der Komponenten a) + b), des Bis-(4-amino-2-halogeno-3,5-dialkylphenyl)-methan zu dem Reaktionsgemisch zugegeben werden.

2. Verfahren nach Anspruch 1, **dadurch gekennzeichnet, daß** ein Bis-(4-amino-2-halogeno-3,5-dialkylphenyl)-methan zugegeben wird, in welchem Hal Cl bedeutet.

3. Verfahren nach Anspruch 1 oder Anspruch 2, **dadurch gekennzeichnet, daß** ein Bis-(4-amino-2-halogeno-3,5-dialkylphenyl)-methan zugegeben wird, worin R₁ bis R₄ Ethyl bedeuten.

4. Verfahren nach einem der Ansprüche 1 bis 3, **dadurch gekennzeichnet, daß** 5 bis 10 Gew.-% des Bis-(4-amino-2-halogeno-3,5-dialkylphenyl)-methan in Bezug auf das Gesamtgewicht von a) + b) zu dem Reaktionsgemisch zugegeben werden.

5. Verfahren nach einem der Ansprüche 1 bis 4, **dadurch gekennzeichnet, daß** Hexamethylendiisocyanat, Diphenylmethandiisocyanat, Toluylendiisocyanat, isophorondiisocyanat und/oder Dicyclohexylmethandiisocyanat als Komponente a) verwendet werden.

6. Verfahren nach einem der Ansprüche 1 bis 5, **dadurch gekennzeichnet, daß** Rizinusöl, wenigstens ein mehrwertiger Polyesteralkohol und/oder wenigstens ein mehrwertiger Polyetheralkohol als Komponente b) verwendet werden.

7. Verfahren nach einem der Ansprüche 1 bis 6, **dadurch gekennzeichnet, daß** Dioctylzinndilaurat als der Katalysator verwendet wird.

8. Verfahren nach einem der Ansprüche 1 bis 7, **dadurch gekennzeichnet, daß** der Katalysator in einer solchen Menge zugegeben wird, daß Trübung des Reaktionsgemisches gerade verschwindet.

9. Polyurethangegenstand, der
a) Di- und/oder Polyisocyanatreste,
b) zwei- und/oder mehrwertige Alkoholreste und
c) gebundene Reste von Bis-(4-amino-2-halogeno-3,5-dialkylphenyl)-methan der allgemeinen Formel 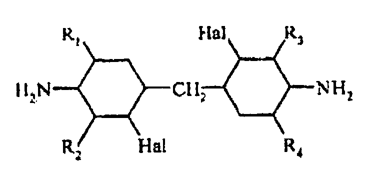
worin Hal Cl oder Br bedeutet und R₁ bis R₄ gleich oder verschieden sind und jeweils eine Alkylgruppe mit 1 bis 4 Kohlenstoffatomen bedeuten, und wenigstens eine metallorganische Verbindung als einen Katalysator umfaßt,
**dadurch gekennzeichnet, daß** das Polyurethan 3 bis 10 Gew.-% in Bezug auf das Gesamtgewicht von a) + b) der Bis-(4-amino-2-halogeno-3,5-dialkylphenyl)-methan-Reste enthält.

10. Gegenstand nach Anspruch 9, **dadurch gekennzeichnet, daß** in den Bis-(4-amino-2-halogeno-3,5-dialkylphenyl)-methan-Resten Hal Cl bedeutet.

11. Gegenstand nach Anspruch 9 oder Anspruch 10, **dadurch gekennzeichnet, daß** in den Bis-(4-amino-2-halogeno-3,5-dialkylphenyl)-methan-Resten R₁ bis R₄ Ethylreste sind.

12. Gegenstand nach einem der Ansprüche 9 bis 11, **dadurch gekennzeichnet, daß** er 5 bis 10 Gew.-% der Bis-(4-amino-2-halogeno-3,5-dialkylphenyl)-methan-Reste enthält.

13. Gegenstand nach den Ansprüche 9 bis 12, **dadurch gekennzeichnet, daß** er als Polyisocyanatreste Hexamethylendiisocyanat-, Diphenylmethandiisocyanat-, Toluylendiisocyanat-, Isophorondiisocyanat- und/oder Dicyclohexylmethandiisocyanatreste enthält.

14. Gegenstand nach einem der Ansprüche 9 bis 13, **dadurch gekennzeichnet, daß** er Rizinusöl-, mehrwertige Polyesteralkohol- und/oder mehrwertige Polyetheralkoholreste als die mehrwertigen Alkoholreste enthält.

15. Gegenstand nach einem der Ansprüche 9 bis 14, **dadurch gekennzeichnet, daß** er eine Einbettung medizintechnischer Gegenstände in speziellen Membranen ist.

## Revendications

1. Procédé de production de polyuréthanes par réaction
a) d'un di- et/ou d'un polyisocyanate, et
b) d'un di- et/ou d'un polyalcool, en présence
c) d'au moins un bis(4-amino-2-halogéno-3,5-dialkylphényl)méthane de formule générale 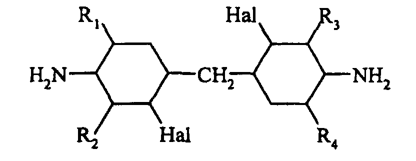
dans laquelle Hal désigne Cl ou Br, et R₁ à R₄ sont identiques ou différents et désignent chacun un groupe alkyle ayant de 1 à 4 atomes de carbone, et d'au moins un composé organométallique servant de catalyseur,
**caractérisé en ce qu'**on ajoute au mélange réactionnel 3 à 10 % en poids, par rapport au poids total des composants a) et b), du bis(4-amino-2-halogéno-3,5-dialkylphényl)méthane.

2. Procédé selon la revendication 1, **caractérisé en ce qu'**on ajoute un bis(4-amino-2-halogéno-3,5-dialkylphényl)méthane dans lequel Hal est Cl.

3. Procédé selon la revendication 1 ou 2, **caractérisé en ce qu'**on ajoute un bis(4-amino-2-halogéno-3,5-dialkylphényl)méthane, dans lequel les substituants R₁ à R₄ sont des groupes éthyle.

4. Procédé selon l'une des revendications 1 à 3, **caractérisé en ce qu'**on ajoute au mélange réactionnel 5 à 10 % en poids du bis(4-amino-2-halogéno-3,5-dialkylphényl)méthane, par rapport au poids total de a) et de b).

5. Procédé selon l'une des revendications 1 à 4, **caractérisé en ce qu'**on utilise en tant que composant a) le diisocyanate d'hexaméthylène, le diisocyanate de diphénylméthane, le diisocyanate de toluylène, le diisocyanate d'isophorone et/ou le diisocyanate de dicyclohexylméthane.

6. Procédé selon l'une des revendications 1 à 5, **caractérisé en ce qu'**on utilise en tant que composant b) l'huile de ricin, au moins un polyesterpolyol et/ou au moins un polyétherpolyol.

7. Procédé selon l'une des revendications 1 à 6, **caractérisé en ce qu'**on utilise en tant que catalyseur du dilaurate de dioctylétain.

8. Procédé selon l'une des revendications 1 à 7, **caractérisé en ce que** le catalyseur est ajouté en une quantité telle que le trouble du mélange réactionnel disparaisse juste.

9. Objet en polyuréthane comprenant
a) des résidus di- et/ou polyisocyanate,
b) des résidus di- et/ou polyalcool, et
c) des résidus liés de bis(4-amino-2-halogéno-3,5-dialkylphényl)méthane de formule générale 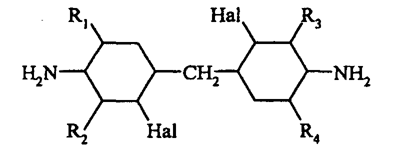
dans laquelle Hal désigne Cl ou Br, et R₁ à R₄ sont identiques ou différents et désignent chacun un groupe alkyle ayant de 1 à 4 atomes de carbone, et au moins un composé organométallique servant de catalyseur,
**caractérisé en ce que** le polyuréthane contient, par rapport au poids total de a) et de b), 3 à 10 % en poids des résidus de bis(4-amino-2-halogéno-3,5-dialkylphényl)méthane.

10. Objet selon la revendication 9, **caractérisé en ce que**, dans les résidus de bis(4-amino-2-halogéno-3,5-dialkylphényl)méthane, Hal désigne CI.

11. Objet selon la revendication 9 ou 10, **caractérisé en ce que**, dans les résidus de bis(4-amino-2-halogéno-3,5-dialkylphényl)méthane, R₁ à R₄ sont des résidus éthyle.

12. Objet selon l'une des revendications 9 à 11, **caractérisé en ce qu'**il contient 5 à 10 % en poids des résidus de bis(4-amino-2-halogéno-3,5-dialkylphényl)méthane.

13. Objet selon les revendications 9 à 12, **caractérisé en ce qu'**il contient en tant que résidus de polyisocyanate des résidus de diisocyanate d'hexaméthylène, de diisocyanate de diphénylméthane, de diisocyanate de toluylène, de diisocyanate d'isophorone et/ou de diisocyanate de dicyclohexylméthane.

14. Objet selon l'une des revendications 9 à 13, **caractérisé en ce qu'**il contient des résidus d'huile de ricin, de polyesterpolyol et/ou de polyétherpolyol en tant que résidus de polyalcool.

15. Objet selon l'une des revendications 9 à 14, **caractérisé en ce qu'**il s'agit d'un encastrement d'objets de technique médicale, en particulier de membranes.
